# EUROPÄISCHE PATENTSCHRIFT

(11) **EP 2 046 475 B1**
(45) Veröffentlichungstag und Bekanntmachung des Hinweises auf die Patenterteilung: **30.03.2011**
(21) Anmeldenummer: 07787475.8
(22) Anmeldetag: 12.07.2007
(51) Int. Cl.: B01D 46/00, B01D 46/52, B01D 46/24

(54) **LUFTFILTERELEMENT MIT TRANSPARENTEN ENDSCHEIBEN UND HERSTELLUNGSVERFAHREN**
AIR FILTER ELEMENT WITH TRANSPARENT END PLATES AND PRODUCTION METHOD
ÉLÉMENT DE FILTRE À AIR À FLASQUES TERMINAUX TRANSPARENTS ET PROCÉDÉ DE PRODUCTION CORRESPONDANT

(30) Priorität: 03.08.2006 DE 102006036643
(43) Veröffentlichungstag der Anmeldung: 15.04.2009
(73) Patentinhaber: Mann + Hummel GmbH, 71638 Ludwigsburg (DE)
(72) Erfinder: BAUDER, Ralf, 68775 Ketsch (DE); DWORATZEK, Klemens, 68535 Edingen (DE)
(86) Internationale Anmeldenummer: PCT/EP2007/057204
(87) Internationale Veröffentlichungsnummer: WO 2008/015092

(56) Entgegenhaltungen:
- EP-A- 1 695 751
- WO-A-2007/023174
- WO-A-2007/054262
- DE-A1- 10 058 251
- DE-A1- 19 919 289

## Beschreibung

### Technisches Gebiet

Die Erfindung betrifft ein Luftfilterelement mit einem zylinderrohrfömigen Filterbalg, der endseitig jeweils mit einer Endscheibe verschlossen ist sowie ein Verfahren zu Herstellung.

### Stand der Technik

Endscheiben sind notwendig, um eine Abdichtung des Filterelements in einem Luftfiltergehäuse vornehmen zu können und den vorgesehenen radialen Strömungsweg durch den Filterbalg zu erzwingen. Wenigstens eine Endscheibe weist an der vom Filterbalg weg weisenden Außenseite einen ringförmigen Dichtungskörper auf. Der Dichtungskörper wird herkömmlich so hergestellt, dass die Endscheibe in eine Gießschale eingesetzt wird und dann ein flüssiger, polymerer Werkstoff eingefüllt wird, der in eine ringförmige Durchbrechung oder Vertiefung an der Endscheibe und/oder der Gießschale fließt. Nach dem Aushärten bzw. Vernetzen wird die Gießschale entfernt, so dass im Bereich des vorher vorhandenen Ringspalts eine Dichtungsfläche an der Endscheibe offen liegt.

Die dargestellte Fertigung ist jedoch zeitaufwendig und entsprechend kostenintensiv. Aufgrund der Aushärtezeit bzw. der notwendigen Zeit zur Vernetzung des polymeren Werkstoffs ist eine bestimmte, nicht verkürzbare Zykluszeit bei der Serienfertigung von Filterelementen notwendig.

Aus der DE 199 19 289 A1 ist ein Verfahren zum Einformen der Stirnkanten eines Filters in induktiv erschmolzenes Kunststoffmaterial bekannt.

Aufgabe der Erfindung ist es, Luftfilterelemente der eingangs genannten Gattung schneller und kostengünstiger herstellen zu können.

### Offenbarung der Erfindung

Diese Aufgabe werden bei einem Luftfilterelement mit den Merkmalen des Oberbegriffs des Anspruchs 1 dadurch gelöst, dass eine Endscheibe ein am Luftfilterelement nach außen gewandtes Trägerelement umfasst, welches wenigstens in Teilbereichen laserlichtdurchlässig ist, und eine zum Filterbalg gewandte Verbindungsschicht, welche wenigstens in Teilbereichen laserlichtabsorbierend ist und welche den Filterbalg dichtend mit dem Trägerelement verbindet, wobei das Trägerelement der Endscheibe wenigstens einen zur Außenseite hin freiliegenden Dichtungskörper aufweist, der durch eine als ringförmige Durchbrechung ausgebildete Ausnehmung im Trägerelement der Endscheibe hindurch tritt und an der Innenseite der Endscheibe mit der Verbindungsschicht verbunden oder sogar einstückig mit dieser zusammen ausgebildet ist.

Eine solche Endscheibe bietet den Vorteil, dass eine Verschweißung mit einem Filterbalg über Laserstrahlen möglich ist und damit keine Topfzeiten von Klebstoffen mehr bei der Fertigung des Luftfilterelements beachtet werden müssen. Vorteilhaft ist weiterhin, dass die Endscheibe gleich mit einer Ringdichtung ausgestattet ist, um eine dichtende Verbindung des Luftfilterelements mit einem Luftfiltergehäuse herstellen zu können, ohne dass separate Dichtungen hergestellt und montiert werden müssen.

Das Trägerelement wird durchstrahlt, die dahinter liegende Verbindungsschicht schmilzt wenigstens teilweise an, so dass der Filterbalg mit seiner Stirnseite in die Schmelze der Verbindungsschicht gedrückt werden kann und damit eine mechanische Verbindung zwischen Filterbalg und Endscheibe hergestellt ist und eine Abdichtung bewirkt ist. Fehlstellen in der Verbindung oder Ablösungen der Verbindungsschicht von der Trägerelement sind von außen durch die transparente Trägerelement hindurch erkennbar, wenn die Verbindungsschicht hinreichend dünn gewählt ist. Üblicherweise reicht eine Schichtdicke von 3 mm aus, um den Filterbalg sicher mit der Endscheibe zu verbinden.

Vorzugsweise besteht die Verbindungsschicht aus einem thermoplastischen Elastomer, das im Spritzgießverfahren hergestellt werden kann. Die Verbindungsschicht kann in einem separaten Körper hergestellt werden, der dann mit dem Körper, der das Trägerelement der Endscheibe bildet, kombiniert ist. Vorzugsweise werden jedoch beide Schichten zugleich mittels 2 Komponentenspritzgießen hergestellt.

Nach dem Herstellen der Endscheibe mit ihren beiden Schichten und dem Anschweißen des Filterbalgs ist das Luftfilterelement gemäß der Erfindung fertig gestellt. Zum Anschweißen wird ein Filterbalg mit seiner Stirnseite an einer Endscheibe angelegt. Ein transparentes Trägerelement, das heißt, ein Trägerelement, das zu einem überwiegenden Teil durchlässig für die Lichtstrahlung einer eingesetzten Lasereinrichtung mit einer bestimmten Wellenlänge ist, wird durchstrahlt. Die durch das Trägerelement hindurch gelangte Laserstrahlung wird in der Verbindungsschicht zumindest in einem solchen Maße absorbiert, dass eine Erweichung oder ein Aufschmelzen der Verbindungsschicht erfolgt. Zeitdauer und Intensität der Bestrahlung werden so gewählt, dass eine möglichst schnelle Aufschmelzung erreicht wird, damit die Wärmeeinleitung in das benachbarte transparente Trägerelement möglichst gering gehalten wird und eine Verformung des transparenten Trägerelements weitgehend vermieden wird.

Ist die Verbindungsschicht erst einmal angeschmolzen, braucht der Filterbalg nur noch in die Schmelze hineingedrückt zu werden. Das Abkühlen führt zum Wiedererstarren der Verbindungsschicht, wobei mit der Erstarrung in die thermoplastische Masse Randbereiche des Filterbalgs eingebettet sind.

Erfindungsgemäß wird bei dem Herstellungsverfahren für ein vorstehend beschriebenes Luftfilterelement ein Aufnahmeelement eingesetzt, das wenigstens in denjenigen Teilbereichen ebenfalls laserlichtdurchlässig ist, hinter denen aufzuschmelzende Bereiche der Verbindungsschicht zu positionieren sind. Das Aufnahmeelement stützt die Endscheibe und trägt dazu bei, die Geometrie des Trägerelements unter Wärmeeinfluss beizubehalten.

Insbesondere ist die Verwendung eines zusätzlichen Aufnahmeelements bei der Herstellung dann vorteilhaft, wenn Verbindungsschicht und Dichtungskörper einstückig hergestellt sind und ein Verbindungselement bilden. Der Dichtungskörper tritt dann an einer ringförmigen Durchbrechung der Endscheibe nach außen, wobei die Außenseite der Endscheibe im Herstellungsprozess stets die nach unten gekehrte Oberfläche ist. Ohne eine zusätzliche Abstützung könnte es zu einem Ausfließen der Schmelze und damit zu einer Zerstörung der bereits vorgeformten Dichtung kommen. Um dies zu verhindern, ist erfindungsgemäß unterhalb des nach außen durchtretenden Dichtungskörpers ein besonders profilierter Stützabschnitt des Aufnahmeelements positioniert.

Ein zusätzlicher Stützabschnitt kann in Form einer zyünderrohrtörmigen Kante ausgebildet sein, welche im Inneren einer zentralen Ausnehmung in der ringförmigen Endscheibe positioniert ist und zwar mit einem Abstand in Bezug auf die Innenkante der ringförmigen Endscheibe, welcher der Dicke einer dort auszubildenden Dichtungslippe entspricht. Ohne einen zusätzlichen Stützabschnitt wäre die Ausbildung einer radial wirkenden Dichtungslippe an der Endscheibe nicht möglich. Das Aufnahmeelement für die Endscheibe stellt somit bei dieser Variante des erfindungsgemäßen Verfahrens eine Gießschale dar, welche zur Formbildung von Teilen des Dichtungskörpers bzw. des Verbindungskörpers beträgt

### Kurze Beschreibung der Zeichnungen

Die Erfindung wird nachfolgend mit Bezug auf die Zeichnung näher erläutert. Die Figuren zeigen im Einzelnen:
- Fig. 1: ein Filterelement in perspektivischer Ansicht,
- Fig. 2: ein Filterelement einer ersten Ausführungsform in einem Schnitt detail und
- Fig. 3: ein Filterelement einer zweiten Ausführungsform in einem Schnitt detail.

### Ausführungsform(en) der Erfindung

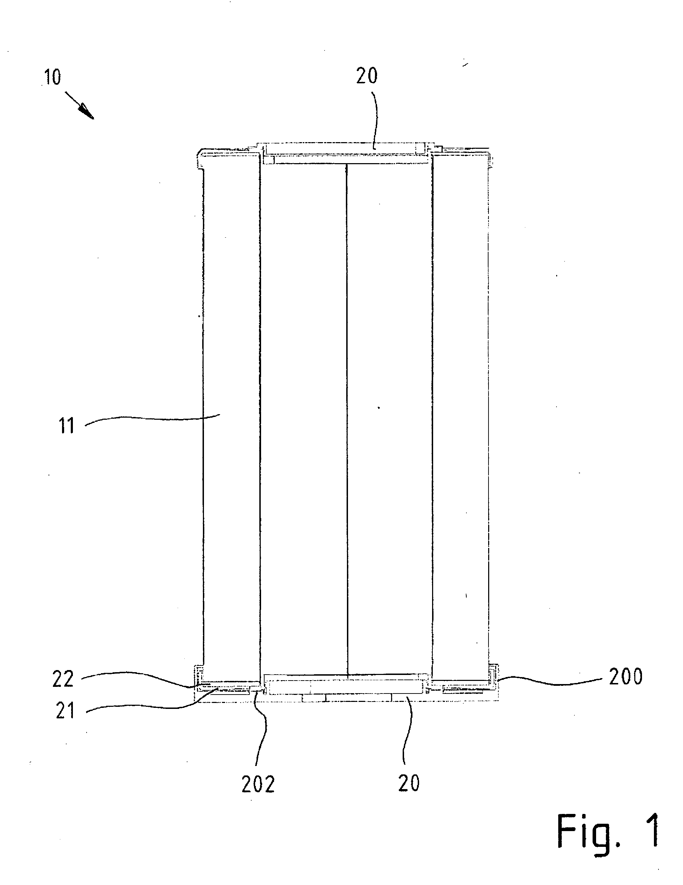

Fig. 1 zeigt ein Luftfilterelement 10 mit einem zylinderrohrförmigen Filterbalg 11 aus einem luftdurchlässigen Filtermedium. An beiden Stirnseiten sind jeweils Endscheiben 20 aufgesetzt und luftdicht mit dem Filterbalg 11 verbunden. Wenigstens eine der Endscheiben 20 ist, zumindest im Gebrauchszustand des Luftfilterelements 10, ringförmig ausgebildet, so dass ein zentraler innerer Strömungskanal geöffnet ist.

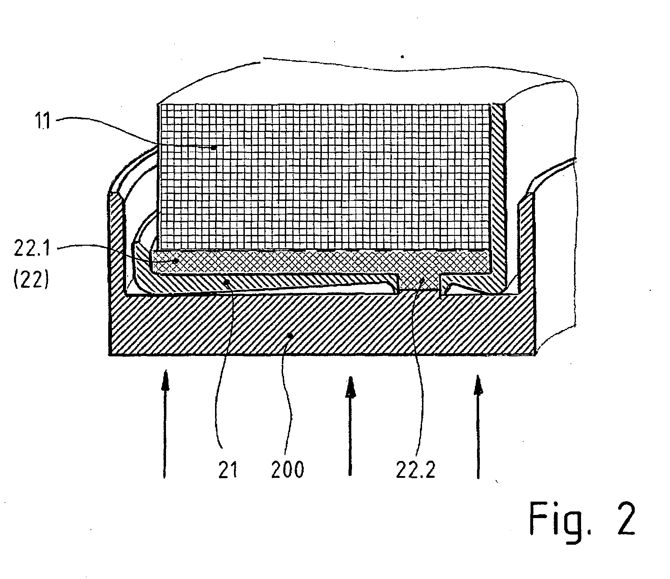

Fig. 2 zeigt eine erste Ausführungsform einer Endscheibe 20 mit einem passenden Aufnahmeelement 200, in das sie eingesetzt ist. Die Endscheibe 20 umfasst ein unten liegendes Trägerelement 21 und eine darüber befindliche Verbindungsschicht 22.1. Ein Filterbalg 11 ist aufgesetzt. Das Aufnahmeelement 200 stützt einen Dichtungskörper 22.2 ab, der an einer Durchbrechung des äußeren Trägerelements 21 an der Endscheibe 20 nach außen tritt. Der Dichtungskörper 22.2 ist mit der eigentlichen Verbindungsschicht 22.1 verbunden, so dass ein einstückiges Verbindungselement 22 ausgebildet ist, das mit dem Trägerelement 21 fest verbunden ist.

Aufnahmeelement 200 und Trägerelement 21 der Endscheibe 20 sind durchlässig für das Laserlicht, das gemäß den Pfeilen in Fig. 2 von unten her eingestrahlt wird und bis in die Verbindungsschicht 22.1 gelangt, wo es absorbiert wird. Anschließend braucht lediglich noch der Filterbalg 11 in die so erzeugte Schmelze in der Verbindungsschicht 22.1 eingesenkt zu werden und der Vorgang für die andere Seite des Filterbalgs wiederholt werden, um die Herstellung des erfindungsgemäßen Luftfilterelements abzuschließen.

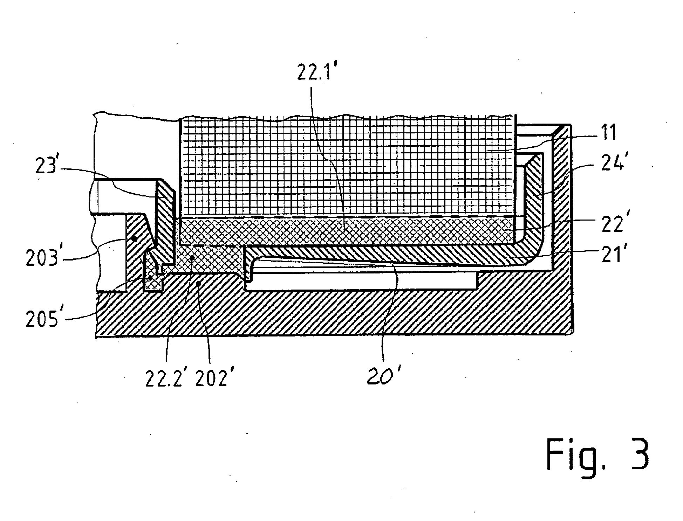

Fig. 3 zeigt ein weiteres Ausführungsbeispiel einer Endscheibe 20' mit einer zugehörigen Aufnahme 200'. Wiederum ist ein axialer Dichtungsabschnitt 22.2' durch einen Stützabschnitt 202' des Aufnahmeelements 200' abgestützt. Unterschiedlich ist hier die aufwendigere Profilierung im Innenbereich der Endscheibe 20'. Ein innerer Ringabschnitt 23' der Endscheibe 20' soll wenigstens teilweise an seine Mantelfläche mit einer Lippendichtung überdeckt werden. Hierzu ist ein Stützabschnitt 203' an dem Aufnahmeelement 200' ausgebildet, der als Matrize zur Ausbildung der Lippendichtung dient. Zwischen dem Ringabschnitt 23' und dem Stützabschnitt 203' des Aufnahmeelements 200' ist eine Kavität 205' ausgebildet, in welcher die Lippendichtung ausgebildet wird.

Das Trägerelement 21' der Endscheibe 20' wie auch das Aufnahmeelement 200' sind wiederum durchlässig für Laserlicht einer bestimmten Wellenlänge, das von unten her durch das Aufnahmeelement 200' und das Trägerelement 21' gestrahlt wird, bis die Verbindungsschicht 22' aufschmilzt. Um die innere Abdichtung gegenüber dem Filterbalg 11 ausbilden zu können, muss eine weitgehende Aufschmelzung der Verbindungsschicht 22' erreicht werden, damit die Schmelze nicht nur in den Hohlraum oberhalb des Stützabschnitts 202' fließt, der zur Ausbildung eines Dichtungskörpers 22.2' vorgesehen ist, sondern auch in die Kavität 205' hineinläuft. Nach dem Auskühlen und dem Erstarren der Schmelze in der Verbindungsschicht 22' ist zum einen der Filterbalg 11 mechanisch fest mit der Trägerelement 21' der Endscheibe 20' verbunden. Zum anderen ist eine kombinierte Dichtung ausgebildet, die einen radialen Lippendichtungsabschnitt wie einen Ringdichtungsabschnitt umfasst.

In dem in Fig. 3 dargestellten Ausführungsbeispiel ist am Ringabschnitt 23' des Trägerelements 20' ein Vorsprung vorgesehen, der ein Verrasten der Endscheibe 20' an einem kompatiblen Vorsprung am Ringabschnitt 203' des Aufnahmeelements 200' ermöglicht. Die Endscheibe 20' liegt damit während des gesamten Herstellungsvorgangs in einer definierten Lage am Aufnahmeelement 200' an, sodass insbesondere auch die Dichtigkeit an den Übergängen gewährt ist und ein unkontrolliertes Ausfließen von Schmelze verhindert wird.

## Patentansprüche

1. Luftfilterelement (10) mit einem zylinderrohrförmigen Filterbalg (11), der endseitig jeweils mit einer Endscheibe (20; 20') verschlossen ist, wobei wenigstens eine Endscheibe ein am Luftfilterelement (10) nach außen gewandtes Trägerelement (21; 21') umfasst, welches wenigstens in Teilbereichen laserlichtdurchlässig ist, und eine zum Filterbalg (11) gewandte Verbindungsschicht (22; 22'), welche wenigstens in Teilbereichen laserlichtabsorbierend ist und welche den Filterbalg (11) dichtend mit dem Trägerelement (21; 21') verbindet, **dadurch gekennzeichnet, dass** die Endscheibe (20; 20') wenigstens einen an der Außenseite des Luftfilterelements (10) freiliegenden Dichtungskörper (22.2; 22.2') aufweist und dieser mit der Verbindungsschicht (22.1; 22.1') verbunden oder einstückig damit hergestellt ist und damit ein Verbindungselement (22; 22') ausbildet, wobei der Dichtungskörper (22.2; 22.2') an einer als ringförmige Durchbrechung ausgebildeten Ausnehmung im Trägerelement (21; 21') nach außen tritt.

2. Luftfilterelement (10) nach Anspruch 1, **dadurch gekennzeichnet, dass** die Verbindungsschicht (22; 22') aus einem thermoplastischen Elastomer gebildet ist.

3. Luftfilterelement (10) nach Anspruch 2, **dadurch gekennzeichnet, dass** das Trägerelement (21; 21') und die Verbindungsschicht (22; 22') als Zwei-Komponenten-Spritzgießteil ausgebildet sind.

4. Verfahren zur Herstellung eines Luftfilterelements (10) nach wenigstens einem der Ansprüche 1 bis 3, mit folgenden Verfahrensschritten:
- Einsetzen einer Endscheibe (20; 20') in ein wenigstens in Teilbereichen laserlichtdurchlässiges Aufnahmeelement (200; 200'), wobei die Endscheibe (20; 20') ein Trägerelement (21; 21'), welches wenigstens in Teilbereichen laserlichtdurchlässig ist, und eine Verbindungsschicht (22.1; 22.1'), welche wenigstens in Teilbereichen laserlichtabsorbierend ist, aufweist, wobei die Endscheibe (20; 20') wenigstens einen an der Außenseite des Luftfilterelements (10) freiliegenden Dichtungskörper (222; 22.2') aufweist und dieser mit der Verbindungsschicht (22.1; 22.1') verbunden oder einstückig damit hergestellt ist und damit ein Verbindungselement (22; 22') ausbildet, wobei der Dichtungskörper (22.2; 22.2') an einer als ringförmige Durchbrechung ausgebildeten Ausnehmung im Trägerelement (21; 21') nach außen tritt; wobei das Aufnahmeelement (200; 200') unterhalb des Dichtungskörpers einen Stützabschnitt zur Verhinderung des Ausfließens von Schmelze aufweist, wobei der Dichtungskörper auf dem Stützabschnitt positioniert wird;
- Anlegen einer Stirnseite eines zylinderrohrförmigen Filterbalgs (11) an die Endscheibe (20; 20');
- Bestrahlen der Endscheibe (20; 20') von dem laserlichtdurchlässigen Trägerelement (21; 21') her bis zum Anschmelzen der Verbindungsschicht (22.1; 22.1'), wobei der Stützabschnitt des Aufnahmeelements (200; 200') das Ausfließen von Schmelze verhindert;
- Anpressen des Filterbalgs (11) an die angeschmolzene Verbindungsschicht (22.1; 22.1') und abkühlen lassen.

## Claims

1. Air filter element (10) with a cylinder tube shaped filter bellows (11), which is closed at either side with an end plate (20; 20') each, at least one end plate comprising at the air filter element (10) an outwardly facing carrier element (21; 21') which is laser light permeable at least in some areas, and a connecting layer (22; 22') facing the filter bellows (11) which is laser light absorbing at least in some areas and which connects the filter bellows (11) sealingly with the carrier element (21; 21'), **characterized in that** the end plate (20; 20') features at the exterior side of the air filter element (10) at least one exposed sealing body (22.2; 22.2') and that this sealing body is connected with the connecting layer (22.1; 22.1') or manufactured in one piece with this connecting layer and thus forms a connecting element (22; 22') with it, the sealing body (22.2; 22.2') passing outwardly at a recess designed as ring-shaped opening in the carrier element (21; 21').

2. Air filter element (10) according to claim 1, **characterized in that** the connecting layer (22; 22') is made of a thermoplastic elastomer.

3. Air filter element (10) according to claim 2, **characterized in that** the carrier element (21; 21') and the connecting layer (22, 22') are designed as two-component injection molded part.

4. Method for manufacturing an air filter element (10) according to at least one of the claims 1 to 3, with the following process steps:
- Placing an end plate (20; 20') into a receiving element (200; 200') which is laser light permeable at least in some areas, the end plate (20; 20') featuring a carrier element (21; 21') which is laser light permeable at least in some areas, and a connecting layer (22.1; 22.1') which is laser light absorbing at least in some areas, the end plate (20; 20') featuring at the exterior side of the air filter element (10) at least one exposed sealing body (22.2; 22.2') and that this sealing body being connected with the connecting layer (22.1; 22.1') or manufactured with it in one piece and thus forming a connecting element (22; 22') with it, the sealing body (22.2; 22.2') passing outwardly at a recess designed as ring-shaped opening in the carrier element (21; 21'), the receiving element (200; 200') featuring underneath the sealing body a supporting portion for preventing the melt from flowing out, the sealing body being positioned on the supporting portion;
- Applying a front side of a cylinder tube shaped filter bellows (11) against the end plate (20; 20');
- Irradiating the end plate (20; 20') from the laser light permeable carrier element (21; 21') up to the melting of the connecting layer (22.1; 22.1'), the supporting portion of the receiving element (200; 200') preventing the melt from flowing out;
- Pressing the filter bellows (11) to the melted connecting layer (22.1; 22.1') and cooling it down.

## Revendications

1. Elément de filtre à air (10) avec un soufflet de filtre (11) en forme de tube cylindrique obturé à chaque extrémité par une plaque d'extrémité (20; 20'), au moins une plaque d'extrémité présentant sur l'élément de filtre à air (10) un élément de support (21; 21') dirigé vers l'extérieur qui laisse passer les rayons laser, tout au moins sur certaines parties, et une couche de jonction (22; 22') orientée vers le soufflet de filtre (11) qui absorbe les rayons laser, tout au moins sur certaines parties, et qui relie le soufflet de filtre (11) de façon étanche à l'élément de support (21; 21'), **caractérisé en ce que** la plaque d'extrémité (20 ; 20') présente au moins un corps d'étanchéité (22.2; 22.2') nu sur la face extérieure de l'élément de filtre à air (10) et que ce conformé est relié à la couche de jonction (22.1; 22.1') ou est fabriqué en un bloc avec cette couche et forme avec elle un élément de jonction (22; 22'), le corps d'étanchéité (22.2; 22.2') sortant vers l'extérieur au niveau d'un creux ménagé dans l'élément de support (21; 21') et réalisé en tant que perforation annulaire.

2. Elément de filtre à air (10) selon la revendication 1, **caractérisé en ce que** la couche de jonction (22; 22') est exécutée en un élastomère thermoplastique.

3. Elément de filtre à air (10) selon la revendication 2, **caractérisé en ce que** l'élément de support (21 ; 21') et la couche de jonction (22; 22') sont réalisés en tant que pièce moulée par injection bi-composants.

4. Procédé de fabrication d'un élément de filtre à air (10) selon au moins l'une des revendications 1 à 3, avec les étapes suivantes:
- mise en place d'une plaque d'extrémité (20; 20') dans un élément de réception (200 ; 200') qui laisse passer les rayons laser, tout au moins sur certaines parties, la plaque d'extrémité (20; 20') présentant un élément de support (21; 21') qui laisse passer les rayons laser, tout au moins sur certaines parties, et une couche de jonction (22.1; 22.1') qui absorbe les rayons laser, tout au moins sur certaines parties, la plaque d'extrémité (20 ; 20') présentant au moins un corps d'étanchéité (22.2; 22.2') nu sur la face extérieure de l'élément de filtre à air (10) et ce corps d'étanchéité étant relié à la couche de jonction (22.1; 22.1') ou étant fabriquée en un bloc avec cette couche et formant avec elle un élément de jonction (22; 22'), le corps d'étanchéité (22.2 ; 22.2') sortant vers l'extérieur au niveau d'un creux ménagé dans l'élément de support (21; 21') et réalisé en tant que perforation annulaire, l'élément de réception (200; 200') présentant en dessous du corps d'étanchéité une section d'appui destinée à éviter l'écoulement de matière fondue, le corps d'étanchéité étant positionné sur la section d'appui ;
- application d'une face frontale d'un soufflet de filtre (11) en forme de tube cylindrique sur la plaque d'extrémité (20; 20') ;
- projection de rayons, depuis l'élément de support (21; 21') laissant passer les rayons laser, sur la plaque d'extrémité (20; 20') jusqu'à l'entrée en fusion de la couche de jonction (22.1; 22.1'), la section d'appui de l'élément de réception (200; 200') empêchant l'écoulement de matière fondue;
- pression du soufflet de filtre (11) sur la couche de jonction (22.1; 22.1') fondue et refroidissement.
